# EUROPEAN PATENT APPLICATION

(11) **EP 0 770 705 A1**
(43) Date of publication of application: **02.05.1997**
(21) Application number: 96907745.2
(22) Date of filing: 01.04.1996
(51) Int. Cl.: C23C 18/28, C23C 18/31, G11B 7/26, C23C 18/26

(54) **ELECTROLESS PLATING METHOD, AND METHOD AND APPARATUS FOR PRODUCING STAMPER**

(30) Priority: 10.04.1995 JP 84352/95; 03.07.1995 JP 167692/95; 01.12.1995 JP 314031/95
(71) Applicant: Kao Corporation, Chuo-Ku Tokyo 103 (JP)
(72) Inventor: UEYAMA, Kenichi Kao Corporation, Research, Haga-gun Tochigi 321-34 (JP); TSURUGA, Tetsuya Kao Corporation, Research, Haga-gun Tochigi 321-34 (JP); ICHIMURA, Ikuhisa Kao Corporation, Research, Haga-gun Tochigi 321-34 (JP); OKUDA, Shinsuke Kao Corporation, Research, Haga-gun Tochigi 321-34 (JP)
(74) Representative: Grünecker, Kinkeldey, Stockmair & Schwanhäusser Anwaltssozietät
(86) International application number: JP9600887
(87) International publication number: WO9632521

(57) **Abstract**

A method and an apparatus for producing a stamper capable of producing in a high yield a stamper for producing a high quality optical disk. According to the conventional production technology of stampers, primary tin ions in a sensitizer containing the tin ions used for electric conduction treatment of a substrate surface are readily oxidized by dissolved oxygen and cause defects during the production of stampers. Therefore, even when a production apparatus is automated, substantially daily maintenance is necessary so as to keep satisfactory yield. The present invention carries out the electric conduction treatment of the substrate surface by treating the substrate surface by a treating solution containing a compound having a betaine structure and a polyoxyethylenealkylamine compound, then treating it by a colloidal solution containing tin and palladium and further conducting electroless plating. In this way, the present invention makes the maintenance work easier in an automated process and makes it possible to produce a high quality stamper with a high production yield.

## Description

### Technical Field

This invention relates to a process for producing a stamper for production of high quality optical discs in high yield and to an apparatus therefor.

### Background Art

Conventional stampers for producing optical discs, such as compact discs (CD) and video discs, have been manufactured, for example, as follows.

A positive photoresist is applied uniformly to a glass substrate having a smooth surface and dried to form a photosensitive layer. The photosensitive layer is exposed in laser beam having information to be recorded and developed with a developer to dissolve and remove the exposed area to form information signal pits.

The surface having the information signal pits is treated with a surface active agent, followed by treating with a saline coupling agent, and a surface conditioning agent containing tannic acid to control the surface charging properties and to render the surface hydrophilic. After washing with water, the surface is treated with an aqueous solution of silver nitrate, followed by washing with water. The surface is then treated with a sensitizer containing stanneous ions, followed by washing with water. The surface is treated with an activator containing palladium ions to deposit palladium catalyst, followed by washing with water. After washing with water, nickel is deposited by electroless plating to render the surface electrically conductive.

Specifically, in the conventional process for producing a stamper, the step of rendering the surface electrically conductive is carried out by the eleven steps of:
(i) treating the surface with a silane coupling agent;
(ii) washing with water;
(iii) treating with tannic acid;
(iv) washing with water;
(v) treating with stannous chloride;
(vi) washing with water;
(vii) treating with an aqueous solution of silver nitrate;
(viii) washing with water;
(ix) treating with palladium chloride;
(x) washing with water; and
(xi) depositing a nickel layer by electroless plating.

Thereafter, a nickel plate is formed thereon by electroforming and removed from the glass substrate to obtain a stamper for production of optical discs, etc.

The above-described series of processes have been carried out in a dust-free room equipped with individual processing units for each process. In recent years, study has been directed to a production system for carrying out all the processes in a closed dust-free housing and provided with an automatic transfer system for materials between each processing unit thereby for labor saving and productivity improvement, as disclosed in Japanese Patent Application Laid-Open 6-195764.

In the conventional apparatus used for the automatic transfer system, the unit for rendering the surface electrically conductive comprises one rotary stage and nine pipes. That is, the unit comprises:
(i) a rotary stage on which a substrate having thereon an exposed photosensitive layer is put and rotated;
(ii) two water pipes for dispensing water at different flow rates on the substrate which is put on the rotary stage;
(iii) a developer pipe for dispensing a developer;
(iv) a first treating agent pipe for dispensing a first treating agent (silane coupling agent);
(v) a second treating agent pipe for dispensing a second treating agent (tannic acid);
(vi) an activator pipe for dispensing an accelerator containing stannous ions;
(vii) a silver nitrate pipe for dispensing silver nitrate;
(viii) an activator pipe for dispensing an activator containing palladium ions; and
(ix) an electroless plating solution pipe for dispensing an electroless plating solution.

While the aforesaid sensitizer containing stannous ions, which is used in the electroless plating, runs in a tank or a pipe, the stannous ions are easily oxidized to stannic ions with present oxygen in the treating solution to form a colloidal precipitate, which eventually causes defects in the stampers. Therefore, the activator containing stannous ions must usually be changed at least once a day, and the pipe, filter and tank must be cleaned occasionally for maintenance of the system. Even though the production system is automated, cleaning for maintenance would be required almost every day in order to maintain a satisfactory yield of stamper. When the cleaning is incomplete, many poor stampers would be successively produced in the automatic system.

Hence, automation of the stamper production system requires more stable active agents. Before the present invention, however, an agent having sufficient performance has not yet been found. Therefore, a process for producing indefectible stampers in high yield even in an automated production system has been sought.

### Disclosure of the Invention

An object of the present invention is to provide a stamper production process and apparatus which can reduce the maintenance cost and produce indefectible stampers in high yield.

The inventors of the invention have conducted extensive study for solving the above-mentioned problems in the automated system. As a result, it has now been found that the object of the present invention is accomplished by carrying out the conductivity-imparting treatment by treating the surface of a substrate with a treating agent for improvement of surface hydrophilic properties (wettability) and for charge control (hereinafter "treating agent"), treating the surface with a colloid solution containing stannous and palladium ions, and treating the surface with an electroless plating solution.

The present invention has been completed based on the above finding. The invention provides a process for producing a stamper comprising the steps of: forming a photosensitive layer on a substrate; drying the photosensitive layer; exposing the photosensitive layer according to information data to be recorded; developing the exposed photosensitive layer and rendering the surface of the substrate having thereon a patterned photosensitive layer electrically conductive; and forming a metal layer on the conductive surface by electroforming, wherein the step of rendering the surface conductive is carried out by treating said surface of the substrate with a treating agent, treating said surface with a colloidal solution containing stannous and palladium to make a palladium catalyst on said surface, and treating the surface with an electroless plating solution. In the exposing process, a laser beam is commonly used.

Specifically, in a preferred embodiment of the process for producing the stamper according to the present invention, the step of rendering the surface of the substrate electrically conductive is carried out by the four steps of;
(i) treating with a surface active agent other than an anionic surface active agent;
(ii) treating with a colloidal solution containing stannous and palladium ions;
(iii) treating with an accelerator (15wt% aqueous solution of hydrochloric acid); and
(iv) depositing a nickel layer by electroless plating.

Further, it is preferred that a step of washing with water is provided after each of the steps (i), (ii) and (iii). Accordingly, a preferred process for producing a stamper is carried out by seven steps.

In addition, in the present invention, as the surface active agent used in the step (i), a treating solution containing both a compound having a betaine structure and a polyoxyethylene alkylamine series compound is particularly preferred.

As to the treatment of rendering the surface of the substrate electrically conductive, the preferred embodiment of the present invention is different from conventional art in the following points.
(1) In the present invention, the treatment is conducted with a surface active agent other than an anionic surface active agent in place of a conventionally used silane coupling agent.
(2) In the present invention, a treatment with tannic acid and a treatment with silver nitrate are not necessary.
(3) In the present invention, a new treatment with an accelerator is employed.
(4) In conventional art, two treatments, that is, a treatment with a sensitizer containing stanneous ions and a treatment with an activator containing palladium ions were conducted. In contrast, in the present invention, one treatment with a colloid solution containing stannum and palladium is conducted.

As described above, the process of the present invention is simpler than that of conventional art as a whole. In the present invention, owing to the above-described change in the steps, generation of colloid precipitation is greatly suppressed. As a result, intervals of washing of the pipes and tank can be made very long. Accordingly, high productivity of stampers is achieved.

The present invention also provides a preferred apparatus for carrying out the above-mentioned process for producing a stamper. The apparatus of the present invention comprises: a unit for carrying out the above-mentioned step of rendering the surface conductive comprises a rotary stage on which a substrate having thereon an exposed photosensitive layer is put and rotated; two water pipes for dispensing water at different flow rates; a developer pipe for dispensing a developer; a treating agent pipe for dispensing a treating agent; a colloidal solution pipe for dispensing a colloidal solution; an accelerator pipe for dispensing an accelerator; and an electroless plating solution pipe for dispensing an electroless plating solution.

That is, in the apparatus for producing the stamper according to the present invention, the unit for rendering the surface of the substrate electrically conductive comprises one rotary stage and seven pipes.

The process for producing a stamper and the apparatus therefor according to the present invention make it possible to simplify the maintenance operation of an automated system and yet to produce indefectible stampers in high yield.

In short, the present invention enables high yield production of indefectible stampers and reduction of cleaning frequency in an automated system.

### Brief Description of the Drawings

Fig. 1 is a schematic illustration of a preferred apparatus which can be used in carrying out the process for producing a stamper according to the present invention, with the details omitted.

Fig. 2 is a schematic illustration showing the details of the fourth unit of the apparatus of the invention shown in Fig. 1.

### Detailed Description of the Invention

The process for producing a stamper according to the present invention will be described below in detail.

The substrate of the present invention can be a glass substrate usually used in the production of optical discs.

The photosensitive layer which is formed on the substrate includes a layer of a photoresist formed by coating method. While either a negative photoresist or a positive photoresist is employable, positive photoresists such as naphthoquinone azide type photoresists are generally used. Commercially available positive photoresists, such as Photoresist HPR 204 (trade name) produced by Fuji-Hunt, and S 1800 (trade name) series produced by Shipley, may be utilized.

The preferable treating agent which can be used in the invention can be a solution containing a surface active agent other than an anionic surface active agent. Examples of such useful surface active agents include amine type surface active agents, quaternary cationic surface active agents, amphoteric surface active agents, and nonionic surface active agents. The solvent in the treating agent solution can be water, alcohols, and water/alcohol mixed solvents. Commercially available surface active agents, such as Cleaner Conditioner 231 (trade name) produced by Shipley, are preferably used.

A particularly preferred solution containing the surface active agent other than an anionic surface active agent con be a treating solution containing both a compound having a betaine structure and a polyoxyethylene alkylamine series compound.

Suitable examples of the compound having a betaine structure are those represented by formula (1): 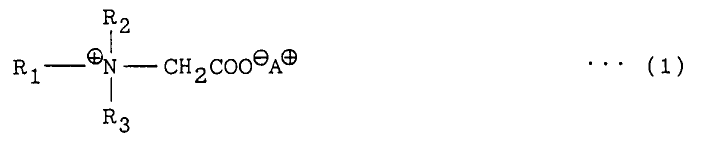 wherein R₁, R₂, and R₃ each represent a hydrocarbon group having 1 to 20 carbon atoms; and A represents a counter ion (cation).

Specific examples of the compound having a betaine structure as represented by formula (1) include a group of compounds represented by the formula shown below. The compounds of this group can be used either individually or as a mixture of two or more thereof.

CₙH₂ₙ₊₁N⁺(CH₃)₂COO⁻Na⁺

wherein n represents an integer of 12 to 18.

The polyoxyethylene alkylamine series compound for use in the invention is an amine series compound having a polyoxyethylene alkyl chain and an alkyl chain. The polyoxyethylene alkyl chain is preferably a polyethylene glycol chain.

The polyoxyethylene alkylamine series compound preferably includes those represented by formula (2): 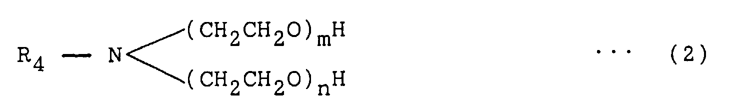 wherein R₄ represents a hydrocarbon group having 1 to 20 carbon atoms; m and n each represent an integer giving the total (m+n) of 4 to 20, provided that m ≠ 0 and n ≠ 0.

In formula (2), R₄ is preferably a hydrocarbon group having 1 to 20 carbon atoms and particularly preferably an alkyl group having 8 to 20 carbon atoms. The total of m and n is preferably 4 to 20.

Specific examples of the polyoxyethylene alkylamine series compound represented by formula (2) are as follows. They can be used either individually or as a mixture thereof.

C₁₈H₃₇N[(CH₂CH₂O)ₘH](CH₂CH₂O)ₙH

As the polyoxyethylene alkylamine series compound, compounds represented by formula (3) can be also used:

R₄(R₅)N(CH₂CH₂O)_{L}H (3)

wherein R₄ and R₅ each represent a hydrocarbon group having 1 to 20 carbon atoms; and L represents an integer of 1 to 20.

The polyoxyethylene alkylamine series compound further includes those obtained by quaternizing the compounds represented by formula (2) or (3) with a quaternizing agent.

The quaternizing agent to be used includes alkylsulfuric acids, such as dimethyl sulfate, diethyl sulfate, and dipropyl sulfate; sulfonic esters, such as methyl p-toluenesulfonate and methyl benzenesulfonate; alkyl phosphates, such as trimethyl phosphite; and halides, such as an alkylbenzene chloride, benzyl chloride, an alkyl chloride, and an alkyl bromide.

While the treating solution is not particularly limited as far as it contains the compound having a betaine structure and the polyoxyethyelne alkylamine series compound, an aqueous solution containing these compounds is preferred. The aqueous solution may contain ethyl alcohol, isopropyl alcohol, etc. appropriately.

The weight ratio of the compound having a betaine structure and the polyoxyethylene alkylamine series compound in the treating solution preferably ranges from 1:0.1 to 5.

The compound having a betaine structure and the polyoxyethylene alkylamine series compound in the treating solution are preferably used in a total amount of 0.001 to 10% by weight based on the total amount of the treating solution.

The colloidal solution which can be used in the present invention is a colloidal solution containing stannous and palladium ions, which is generally called "catalyst". The colloidal solution is a colloidal activator prepared by mixing stannous chloride and palladium chloride and is much more stable and has a far longer working life than a solution containing stannous chloride alone.

The colloidal solution may be either a hydrochloric acid type stannous-palladium series activator or a sodium chloride type stannous-palladium series activator. More specifically, commercially available solutions, such as HS-201B (trade name), produced by Hitachi Kasei Ltd.; Cuposit Catalyst 9F (trade name) and Cataposit 44 (trade name), both produced by Shipley; and Catalyst C (trade name), produced by Okuno Seiyaku K.K., can be used.

The electroless plating solution used in the present invention is not particularly limited. Nickel-based plating solutions are preferable, such as nickel-boron type, nickel-phosphorus type, or nickel-tungsten type solutions, and the like.

In carrying out the process of the present invention, the steps of forming a photosensitive layer on a substrate, drying the photosensitive layer, exposing the photosensitive layer in a laser beam having information to be recorded, developing the exposed photosensitive layer and rendering the surface of the substrate conductive, and electroforming a metal layer on the surface.

The process for producing a stamper according to the present invention is characterized in that the conductivity-imparting treatment is carried out by treating the surface of the substrate with the above-described treating agent, treating the surface with the above-described colloidal solution to make the palladium catalyst on the surface, and further treating the surface with the above-described electroless plating solution.

The treatment of the surface with the treating agent is for improvement of surface hydrophilic properties (wettability) and for charge control. This treatment is preferably performed by applying the treating agent to the surface by spin coating method or dip coating method at 20 to 50°C, more preferably 25 to 45°C for 0.5 to 20 minutes.

After the treatment with the treating agent and prior to the treatment with the colloidal solution, the surface of the substrate is preferably washed with water to remove the treating agent on the surface.

The treatment of the surface with the colloidal solution is preferably conducted by applying the colloidal solution to the surface by spin coating method or dip coating method at 20 to 40°C for 0.5 to 20 minutes. By this treatment, palladium catalyst nuclei are attracted to the surface.

After the treatment with the colloidal solution, it is preferred to remove the stannous component from the surface with an accelerator. The accelerator to be used for removing stannous ion from the surface can be an aqueous solution of sulfuric acid, hydrochloric acid or sodium hydroxide, and commercially available products, such as ADP-501 (trade name) produced by Hitachi Kasei Ltd. and Accelerator 19 (trade name) produced by Shipley.

The removal of the stannous ions from the surface can be carried out, for example, by applying the accelerator to the surface by spin coating method for a reaction period of 0.5 to 15 minutes.

After the treatment with the colloidal solution and prior to the treatment with the electroless plating solution, the surface of the substrate is preferably washed with water.

The thickness of the layer formed by electroless plating is not particularly limited, however, preferable thickness is about 300 Å to 2000 Å and preferably as uniform as possible.

The treatment of the surface with the electroless plating solution is performed preferably for 1 to 10 minutes, and also usually at 20 to 70 °C, preferably at 25 to 45 °C. While plating is usually performed under heating, it can be conducted at room temperature with selection of the compounds or composition ratio of the electroless plating solution.

The treatment with the treating agent, the treatment with the colloidal solution, and the treatment with the electroless plating solution in the conductivity-imparting treatment can be carried out either by spin coating method or dip coating method as stated above. It is preferred, however, to conduct all of these treatments by spin coating method using the same spin coater because a dipping solution used for dip coating method tends to change its property with the lapse of time.

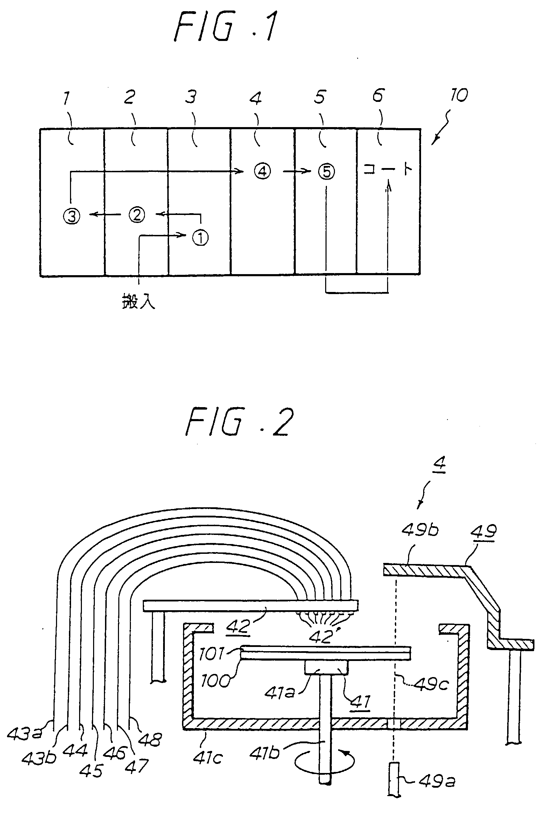

The process for producing a stamper according to the present invention will be explained in more detail by referring to a preferred apparatus shown in Fig. 1 which can be used in the present invention.

Fig. 1 is a schematic illustration of a preferred apparatus which can be used for carrying out the process for producing a stamper according to the present invention without the details.

An apparatus 10 shown in Fig. 1, which is preferably used in the present invention, comprises a first unit 1 where a photosensitive layer is irradiated with a laser beam having the data (information signals) to be recorded to provide exposed areas corresponding to the information signals; a second unit 2 having an opening for accepting a substrate into the apparatus and a drying mechanism for drying a photoresist-coated substrate, a third unit 3 where a substrate is coated with a positive photoresist with a uniform thickness to form a photosensitive layer, a fourth unit 4 where an exposed photosensitive layer is developed and the surface of the substrate having thereon a residual patterned photosensitive layer is rendered conductive, a fifth unit 5 having an opening for taking out the substrate, wherein a metal plate is formed on the conductive surface by electroforming, and a sixth unit 6 where protective lacquer is applied to the surface of a stamper having pits.

The apparatus is equipped with a transfer mechanism for transfer of a substrate between the units. The inside of the apparatus is maintained at constant temperature and humidity and dust-free.

In carrying out the process for producing a stamper according to the present invention by means of the above-described apparatus, a glass substrate is carried into the second unit 2 through the opening and transferred to the third unit 3, where the surface of the glass substrate is cleaned and subjected to a treatment with a primer and then coated with a photoresist to form a photosensitive layer (photosensitive layer forming step, denoted by (1) in Fig. 1).

The coating with the primer and the photoresist is not particularly restricted in manner and may be carried out by spin coating method, dip coating method, and the like. Spin coating method is preferable in terms of a uniform thickness of the photoresist film.

A silane coupling agent is generally used as primer.

The glass substrate coated with the photoresist and thereby having a photosensitive layer is then transferred to the second unit 2 and dried by heating (drying step, denoted by (2) in Fig. 1).

After completion of the drying step, the glass substrate is transferred to the first unit 1, where the photosensitive layer is exposed in a laser beam having the desired data (information signals) to provide an exposed area in the photosensitive layer (exposure step, denoted by (3) in Fig. 1).

The glass substrate with the exposed photosensitive layer is subsequently transferred to the fourth unit 4, in which a developer is applied to the surface of the substrate for development, whereupon the exposed area is removed and the unexposed area of the photosensitive layer remains on the substrate with a desired pattern. The substrate is then subjected to the above-mentioned conductivity-imparting treatment (denoted by (4) in Fig. 1) in the fourth unit 4.

The developer and the method of development processing can be selected according to the type of the photoresist etc. employed.

The fourth unit 4 for carrying out the conductivity-imparting treatment is described in detail with reference to Fig. 2. The fourth unit 4 comprises a rotary stage 41 which rotates with a substrate 100 having an exposed photosensitive layer 101 being put thereon, two water pipes 43a and 43b from which water is dispensed at different flow rates, a developer pipe 44 for dispensing a developer, a treating agent pipe 45 for dispensing the above-described treating agent, a colloidal solution pipe 46 for dispensing the above-described colloidal solution, an accelerator pipe 47 for dispensing an accelerator, and an electroless plating solution pipe 48 for dispensing the above-described electroless plating solution. In addition, the fourth unit 4 comprises a laser beam irradiation monitor system 49 for checking the surface condition of the substrate 100.

In detail, the rotary stage 41 is made up of a mount 41a and an axis 41b which support the mount 41a. The axis 41b is connected to a motor (not shown).

A splash guard 41c for preventing a splash of the dispensed liquid is provided around the rotary stage 41.

A pipe fixing plate 42 for holding the ends of the above-mentioned pipes is provided above the rotary stage 41 (above the center of the substrate 100). The pipe fixing plate 42 is supported by an axis set by the side of the rotary stage 41. On the surface of the pipe fixing plate 42 facing downward are provided as many nozzles 42' as the pipes.

The tips of the water pipe 43a, water pipe 43b, developer pipe 44, treating agent pipe 45, colloidal solution pipe 46, accelerator pipe 47, and electroless plating solution pipe 48 are separately arranged. The other ends- of these pipes are connected to each tank (not shown) via pumps for supply of the solutions (not shown).

The monitor system 49 is made up of a light source 49a provided beneath the splash guard 41c and a laser beam measuring member 49b provided over the rotary stage 49. The laser beam measuring member 49b is to measure a laser beam 49c emitted from the light source 49a.

In the fourth unit 4, a developer is dispensed through the developer pipe 44 from the nozzle 42' to the substrate 100 on the rotary stage 41 in a high speed rotation. In this development processing, the progress of the development process is monitored with the monitor system 49.

The development processing is followed by the above-mentioned conductivity-imparting treatment. The substrate 100 in a rotation is washed with water (pure water) dispensed from the water pipe 43a at a flow rate of 1000 ml/min or more and water (pure water) dispensed from the water pipe 43b at a flow rate of 1000 ml/min or less. The surface is then treated with the treating agent supplied from the treating agent pipe 45, followed by washing with water from the water pipe 43b. The colloidal solution is supplied through the colloidal solution pipe 46 to the surface of the substrate to make the palladium catalyst on the surface, followed by washing with water from the water pipe 43b. The stannous ions remaining on the surface are removed by using the accelerator from the accelerator pipe 47, followed by washing with water from the water pipe 43b. Finally, the surface is treated with the electroless plating solution supplied from the electroless plating solution pipe 48.

Some of the pipes, for example, the pure water pipe and the developer pipe, may have a common nozzle.

The completion of the electroless plating is sensed by the monitor system 49.

In the apparatus for producing a stamper shown in Fig. 2, the time and unsuccessful rate for the development step and conductivity-imparting treatment are remarkably reduced thanks to spin coating method using only one spin coater.

The glass substrate having been thus rendered conductive is then transferred to the fifth unit 5, where a nickel plate having a thickness of about 200 to 350 µm is electroformed on the surface (metal plate forming step, denoted by (5) in Fig. 1).

After completion of the metal plate forming step, the glass substrate is taken away from the apparatus, and the nickel plate is removed from the glass substrate. The removed nickel plate is cleaned with a commercially available stripper, etc. and then transferred to the sixth unit 6, where a protective lacquer is coated on the plate. The coated nickel plate is taken out of the unit, the back surface is polished, and unnecessary parts of both the inner and outer circumferences are trimmed away by punching, to obtain a stamper having formed thereon pits of the desired information signals.

The process for electroless plating according to the present invention is carried out in the same manner as in the above-described conductivity-imparting treatment of the process for producing a stamper, except in that the subject of electroless plating is the surface of a molded article or the surface of a substrate having provided thereon a resin in a prescribed pattern and that the treating agent to be used is a treating solution containing a compound having a betaine structure and a polyoxyethylene alkylamine series compound.

The molded article as referred to above can be a molded article comprising glass, a silicone wafer, ceramics, resins, etc.

The substrate having provided thereon a resin in a prescribed pattern can be a substrate having a patterned resin which is used in the production of a stamper for producing optical discs, etc. More specifically, such a substrate can be obtained by coating a photosensitive resin (positive photoresist) on a glass substrate, exposing the photosensitive resin according to desired data, and developing (dissolving and removing) the exposed area of the photosensitive resin to leave the solvent-insoluble photosensitive resin on the substrate in a prescribed pattern.

The present invention will now be illustrated in greater detail with reference to Example and Comparative Example, but it should be understood that the present invention is not construed as being limited thereto.

### EXAMPLE

A disc-shaped glass substrate having a diameter of 160 mm was put in the second unit 2 of the apparatus shown in Fig. 1 and transferred to the third unit 3. In the third unit 3, the glass substrate was washed with water, and Photoresist HPR 204 (trade name), produced by Fuji-Hunt, was applied to the surface of the glass substrate by means of a spin coater (photosensitive layer forming step). The photosensitive layer was dried in the second unit 2 (drying step) and then selectively exposed in laser beam having information signals in the first unit 1 (exposure step) and then transferred to the fourth unit 4.

In the fourth unit 4 the glass substrate was put on the stage of the spin coater by a handling system and fixed thereon by a vacuum chuck of the rotary stage.

An alkaline developer was applied by spin coating method to dissolve and remove the exposed area. The supply of the development was stopped when prescribed information pits were formed. The surface was thoroughly spin washed with ultrapure water to obtain the glass substrate having thereon the residual photosensitive layer in a prescribed pattern.

The surface of the glass substrate with the residual patterned photosensitive layer was spin coated with a 5 wt% aqueous solution of Cleaner Conditioner 231 (trade name), produced by Shipley, to conduct a reaction for about 3 minutes.

After the surface was spin washed with water, an aqueous solution containing 10 wt% of a stannous palladium colloidal solution Catalyst 9F (trade name), produced by Shipley was applied thereto by spin coating method to conduct a reaction for 3 minutes.

After the above treatment, the surface was spin washed with water, and a 5 wt% aqueous solution of an accelerator Accelerator 19 (trade name) (15wt % aqueous solution of hydrochloric acid) produced by Shipley, was applied by spin coating method to conduct a reaction for about 1 minute to remove the stannous ions remaining on the surface, followed by spin washing with water. An electroless nickel plating solution OS 1580 (trade name), produced by Shipley, warmed at about 40°C was applied to the surface by spin coating method to conduct a reaction for about 8 minutes to render the surface conductive.

After the above conductivity-imparting step, the substrate was washed with water and dried.

The glass substrate was then transferred to the fifth unit 5, where a nickel plate having a thickness of about 300 µm was electroformed thereon using the glass substrate as a cathode (metal plate forming step).

The glass substrate having thereon a nickel plate was taken out of the apparatus. The nickel plate was removed from the glass substrate, cleaned, and put into the sixth unit 6 of the apparatus, where the surface of the nickel plate having pits was coated with protective lacquer. The back surface of the nickel plate was polished arid trimmed by punching to obtain a stamper.

According to the process described in the Example, the operations from the photosensitive layer forming step through the metal plate forming step can be carried out automatically. Although it took about 4 hours from the start of the production of the first stamper, a second, third stamper, etc. were obtained about every one hour.

On continuous production for 30 consecutive days without cleaning for maintenance of the piping and tanks, 660 stampers were produced in total (22 stampers were produced per day in average.). And 627 out of 660 were proved indefectible, achieving a yield of 95% (defectives due to the individual steps in the process of the present invention were not recognized). The production line was not stopped throughout the continuous production.

### EXAMPLE 2

A conductivity-imparting step (electroless plating treatment) was carried out as follows.

The glass substrate having the photosensitive layer in a prescribed pattern obtained in Example 1 was mounted on the stage of the fourth unit 4 used in Example 1, and the surface of the substrate (the surface with the resin) was spin-coated with a processing solution A to conduct a reaction for 30 seconds. After spin washing with water, an aqueous solution containing 5 wt% of a stannous-palladium series activator HS-201B (trade name) produced by Hitachi Kasei, Ltd. was applied to the surface of the substrate by spin coating to conduct a reaction for about 1 minute. After spin washing with water, a 5 wt% aqueous solution of an accelerator ADP-501 (trade name) produced by Hitachi Kasei, Ltd. was applied by spin coating to conduct a reaction for about 1 minute to remove the stannous elements remaining on the surface and to attract catalyst nuclei to the surface.

After completion of the reaction, spin washing with water is carried out, and an electroless nickel plating solution OS1580 (trade name), produced by Shipley, warmed at about 60°C was applied by a spin coating method to conduct a react ion for about 10 minutes thereby to form a nickel plate.

After washing with water and drying, a nickel plate having a thickness of about 300 µm was electro-formed thereon using the glass substrate as a cathode. The substrate was taken out of the apparatus, and the nickel plate was removed from the glass substrate. After cleaning the nickel plate, protective lacquer was applied to the surface having pits. The back surface of the nickel plate was polished and trimmed by punching to obtain a stamper. The resulting stamper had no apparent defect. On performance evaluation of signal characteristics, satisfactory signal characteristics were obtained. When 50 stampers were produced in the same manner, the block error rate was 1/sec in average.

The processing solution A used above was prepared as follows.

The compound having a betaine structure as represented by formula (3): 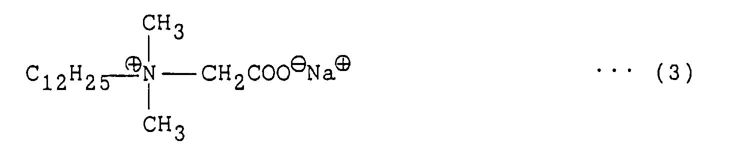 and a polyoxyethylene alkyl series compound represented by formula (4): 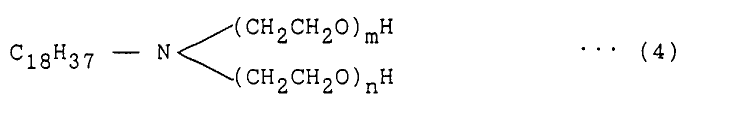 wherein m and n each represent an integer giving the total (m+n) of 20, were added to water in an amount of 2g and 3g, respectively, per liter of water.

### COMPARATIVE EXAMPLE

Stampers were produced in the same manner as in Example except that the conductivity-imparting step was carried out by the eleven steps of:
(i) treating the surface of a glass substrate with a silane coupling agent;
(ii) washing with water;
(iii) treating with tannic acid;
(iv) washing with water;
(v) treating with stannous chloride;
(vi) washing with water;
(vii) treating with an aqueous solution of silver nitrate;
(viii) washing with water;
(ix) treating with palladium chloride;
(x) washing with water; and
(xi) depositing a nickel layer by electroless plating.

During the continuous running, daily exchange of the activating solutions and cleaning of the piping were required. During the cleaning of the piping, the production line was stopped. As a result, 330 stampers were obtained in total (11 stampers were produced per day in average) and 215 out of 330 were found indefectible, for a yield of 65%.

## Claims

1. A process for electroless plating the surface of a molded article or the surface of a substrate having thereon a resin in a prescribed pattern, which comprises treating said surface with a treating solution containing a compound having a betaine structure and a polyoxyethylene alkylamine series compound, treating the surface with a stannous-palladium series activator to attract catalyst nuclei onto said surface, and treating the surface with an electroless plating solution to form a metal plate thereon.

2. The process according to claim 1, wherein said compound having a betaine structure is a compound represented by formula (1): 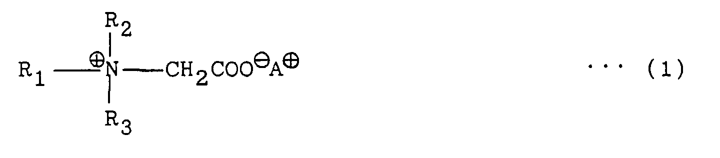 wherein R₁, R₂, and R₃ each represent a hydrocarbon group having 1 to 20 carbon atoms;; and A represents a counter ion (cation),
and said polyoxyethylene alkylamine series compound is a compound represented by formula (2): 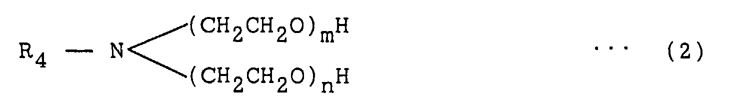 wherein R₄ represents a hydrocarbon group having 1 to 20 carbon atoms; m and n each represent an integer giving the total (m+n) of 4 to 20, provided that m ≠ 0 and n ≠ 0.

3. A process for producing a stamper comprising the steps of: forming a photosensitive layer on a substrate; drying the photosensitive layer; exposing the photosensitive layer according to information data to be recorded; developing the exposed photosensitive layer and rendering the surface of the substrate having thereon a patterned photosensitive layer electrically conductive; and forming a metal plate on the conductive surface by electroforming, wherein the step of rendering the surface conductive is carried out by treating the surface of the substrate with a treating agent for improvement of surface hydrophilic properties and for change control, followed by treating the surface with a colloidal solution containing stannous and palladium ions to make a palladium catalyst on the surface, and followed by treating the surface with an electroless plating solution.

4. The process for producing a stamper according to claim 3, wherein said step of rendering the surface conductive comprises the steps of:
(i) treating with a treating solution containing a surface active agent other than an anionic surface active agent;
(ii) treating with a colloidal solution containing stannous ions and palladium ions;
(iii) treating with an accelerator; and
(iv) treating with an electroless plating solution to form a nickel plate.

5. The process for producing a stamper according to claim 4, wherein the steps (i), (ii), and (iii) are each followed by washing with water.

6. The process for producing a stamper according to claim 4, wherein said solution containing the surface active agent other than an anionic surface active agent is a treating solution containing both a compound having a betaine structure and a polyoxyethylene alkylamine series compound.

7. The process for producing a stamper according to claim 3, wherein the treatment with the treating agent, the treatment with the colloidal solution, and the treatment with the electroless plating solution are all carried out by spin coating method.

8. The process for producing a stamper according to claim 3, wherein the treating agent is a solution containing a surface active agent other than an anionic surface active agent.

9. The process for producing a stamper according to claim 3, wherein the treatment of the surface with the treating agent is performed at 20 to 50 °C for 0.5 to 20 minutes.

10. The process for producing a stamper according to claim 3, wherein the treatment of the surface with the colloidal solution is performed at 20 to 40 °C for 0.5 to 20 minutes.

11. The process for producing a stamper according to claim 3, wherein the surface of the substrate is washed with water after the treatment with the colloidal solution and prior to the treatment with the electroless plating solution.

12. The process for producing a stamper according to claim 3, wherein the treatment of the surface with the electroless plating solution is performed at 20 to 70 °C for 1 to 10 minutes.

13. An apparatus for carrying out a process for producing a stamper according to claim 3 comprises:
a unit for carrying out the step of rendering the surface conductive comprising a rotary stage on which a substrate having thereon an exposed photosensitive layer is put and rotated;
two water pipes for dispensing water at different flow rates;
a developer pipe for dispensing a developer;
a treating agent pipe for dispensing a treating agent;
a colloidal solution pipe for dispensing a colloidal solution;
an accelerator pipe for dispensing an accelerator; and
an electroless plating solution pipe for dispensing an electroless plating solution.

14. The apparatus according to claim 13, wherein said apparatus is equipped with a laser beam irradiation monitor system for checking the surface condition of the substrate having thereon an exposed photosensitive layer.
